# EUROPEAN PATENT SPECIFICATION

(11) **EP 4 559 700 B1**
(45) Date of publication and mention of the grant of the patent: **14.10.2026**
(21) Application number: 23211805.9
(22) Date of filing: 23.11.2023
(51) Int. Cl.: B60C 23/06, G01C 22/02, B60C 19/00

(54) **TIRE MILEAGE DETERMINATION OF A TIRE USING AN ACCELERATION SENSOR MOUNTED TO THE TIRE**
REIFENLAUFLEISTUNGSBESTIMMUNG EINES REIFENS UNTER VERWENDUNG EINES AM REIFEN MONTIERTEN BESCHLEUNIGUNGSSENSORS
DÉTERMINATION DU KILOMÉTRAGE D'UN PNEU À L'AIDE D'UN CAPTEUR D'ACCÉLÉRATION MONTÉ SUR LE PNEU

(43) Date of publication of application: 28.05.2025
(73) Proprietor: Bridgestone Europe NV/SA, 1930 Zaventem (BE)
(72) Inventor: Testi, Giulio, 00128 Roma (IT); Alleva, Lorenzo, 00128 Rome (IT)
(74) Representative: Bardehle Pagenberg Partnerschaft mbB Patentanwälte Rechtsanwälte

(56) References cited:
- US-A- 5 569 848
- US-A1- 2014 107 946

## Description

### 1. Technical Field

The invention relates to methods for tire mileage determination of a tire. In detail, it provides a method directed at measuring, by an acceleration sensor mounted to the tire, an acceleration in a tire radial direction in one or more acceleration measurements and calculating a reference acceleration and determining a tire velocity based at least partly on the measured acceleration and the reference acceleration.

### 2. Background

Common tire mileage estimation and/or measuring means may be configured to determine and/or measure the same tire mileage for all tires mounted to the same vehicle. However, there are common scenarios in which such means and/or methods yield substantial errors in determining the actual tire mileage of a specific tire. Exemplary scenarios include for example driving states of trucks in which specific tires may be exchanged and/or one or more tires may be lifted off the road, for example when a truck is driving without load. In such driving state, e.g., the front wheels and the rear wheels approximately travel the same distance while however the central wheels, which may be lifted off the road, accumulate no tire mileage at all.

In general, mileage of a tire does not always follow that of the tractor unit of a vehicle. Therefore, it may be advantageous to specifically determine the tire mileage for separate clients individually. Otherwise, these substantial errors in the determines tire mileages prevent one from making good decisions, for example deciding when a tire needs to be replaced or not. Calculating the mileage of a single tire using the mounted sensor allows one to keep information on its history even when it is disassembled and reassembled on different vehicles (for example trailers).

Possible approaches for this include mounting individual sensors to individual tires.

For example, US 2014/107946 A1, US 2011/066397 A1, US 2014/107946 A1, US 2021/260937 A1, and WO 2020/038675 A1 relate to methods and devices utilizing tire-mounted acceleration sensors to, e.g., determine a tire mileage or tire wear based thereon.

However, known methods and devices suffer from several disadvantages: First, their accuracy and reliability may still be further improved. Second, complex tire mileage or tire wear estimation/determination procedures may require an external means, e.g., a remote server or a vehicle-mounted device to be included to perform said procedures or at least parts thereof. This increases complexity, costs and potentially initiation and/or maintenance work.

Therefore, there is still a need to further improve methods, devices and systems for tire mileage determination of a tire.

### 3. Summary

The above need is met by the invention according to claims 1, 14 and 15.

Preferred aspects of the invention are set forth in dependent claims 2-13.

A first aspect of the present invention relates to a method for tire mileage determination of a tire. Said method comprises measuring, by an acceleration sensor mounted to the tire, an acceleration in a tire radial direction in a measurement sequence comprising two or more acceleration measurements, wherein a first acceleration measurement and a second acceleration measurement are temporally separated by a measurement sequence time, T_{seq}. Therein, the T_{seq} is less than a tire revolution time, Tᵣₑᵥ, at a predetermined maximum driving speed, vₘₐₓ, and T_{seq} is more than a contact patch time, T_{cp}, in which a portion of the tire is in contact with a ground at a predetermined minimum driving speed, vₘᵢₙ.

Regarding the second aspect, the inventors understood that, while an ideal non-deformable tire will produce only a centrifugal acceleration on the sensor, a real tire undergoes a deformation on the portion of the tire - known as the "contact patch" - in contact with the surface the vehicle is driving on, herein referred to as the "road". This deformation can be seen by the sensor as a Z-axis accelerometric signal superimposed to the centrifugal acceleration. Since one wants to measure only the centrifugal acceleration of the tire in order to convert it into a wheel speed it is convenient to measure the radial acceleration at least two times within the measurement sequence. The time difference between the two acceleration measurements, the measurement sequence time T_{seq}, may thus be selected in order to be greater than the maximum contact patch time in order to be sure to have at least one acceleration measurement when the acceleration sensor is not located at the contact patch area. For the same reason, this time interval should be shorter than one revolution time Tᵣₑᵥ at the predetermined maximum driving speed vₘₐₓ.

In an example of a vehicle tire with an average radius of about 0.5 m (about 3.2 m of circumference) one may observe a contact patch length of about 5% of the circumference. If the minimum speed one wants to be detectable is 15 km/h, this corresponds to a revolution time of about 770 ms and a contact patch time of 38 ms. If the maximum speed of the vehicle one wants to be detectable is 90 km/h, this corresponds to a revolution time of about 128 ms and a contact patch time of about 7 ms for the same wheel. For this case if we choose a time interval between 38 ms (i.e., the maximum of contact patch time) and 128 ms (the minimum of revolution time) it may be guaranteed that at least one measurement lies outside the contact patch. Generally, the expressions "speed" and "velocity" are used herein interchangeably.

Therefore, the inventive method may yield a simple yet efficient way to guarantee that the tire mileage determination is based on unadulterated acceleration measurements by ruling out contact patch-related effects that would yield substantial alterations of the acceleration measurements. This may increase the efficiency, reliability, and/or accuracy of the acceleration measurement and/or the tire mileage determination.

The acceleration sensor (also known as an accelerometer) may comprise a device designed to measure the acceleration experienced by a body. Acceleration herein refers to the rate of change of velocity, which can occur in different directions and magnitudes.

Exemplary embodiments of acceleration sensors can comprise one or more of the following: A piezoelectric accelerometer: This type of acceleration sensor may utilize the piezoelectric effect to measure acceleration, wherein a piezoelectric crystal may generate an electric charge when subjected to mechanical stress, which may be proportional to the applied acceleration. In a variation thereof, a piezoresistive accelerometer may measure the acceleration by detecting changes in the resistance of piezoresistive elements due to mechanical stress. A capacitive accelerometer may measure acceleration by detecting changes in capacitance due to the relative displacement of microstructures caused by acceleration. A surface acoustic wave accelerometer may rely on acoustic waves traveling along the surface of a substrate. Acceleration causes a phase shift in the waves, which may be detected and/or measured to determine the acceleration. A fiber optic accelerometer may utilize fiber optic cables to detect acceleration-induced strain. Therein, changes in the light signals traveling through the fibers may be measured to determine the acceleration. A differential capacitive accelerometer may use two sets of capacitive plates that move differentially with acceleration. The resulting differential capacitance changes may be converted into acceleration readings. In a tunneling accelerometer, the movement of a proof mass may cause a change in the tunneling current between two electrodes. The current variation may be used to calculate the applied acceleration. A thermal accelerometer may utilize the heating of a resistive element due to acceleration-induced convection. The changes in resistance may be proportional to the applied acceleration. A microfluidic accelerometer may use fluid dynamics principles to detect accelerations. The motion of a fluid column inside microfluidic channels may change with acceleration, allowing for accurate measurements.

The acceleration sensor may be mounted to the tire, e.g., to one or more of the following: a tread (e.g., inside the grooves of the tread and/or encapsulated by one or more tread elements), a sidewall, a bead, an inner liner, a belt or a ply, a bead wire, a filler, and/or an apex of the tire. In a preferred embodiment, the acceleration sensor may be mounted to an inner layer, e.g., the inner liner of the tire, essentially on the equatorial plane of the tire. A tire-mounted acceleration sensor thus primarily senses a radial acceleration a_{R} which is physically linked to the vehicle's velocity v by a_{R} = v²/Rₛ, wherein Rₛ is the radius defined by the distance between the axis of the tire and the location (e.g., defined by the sensor's 3D-geometrical center) at which the acceleration sensor is mounted.

Thus, when the vehicle drives in a first driving state at a first velocity, the acceleration sensor may experience a first radial acceleration and measures said first acceleration, e.g., as described herein. When the vehicle drives in a second driving state at a second velocity different from the first velocity, the acceleration sensor may experience a second radial acceleration and measures said second acceleration, e.g., as described herein, wherein the second acceleration is different from the first acceleration. E.g., when the first velocity is larger than the second velocity, the first acceleration is larger than the second acceleration, and vice versa.

As described herein, the acceleration sensor may be configured to sequentially sense an acceleration. In said sequence, T_{seq} may, e.g., be smaller than Tᵣₑᵥ/2 at the predetermined maximum and/or minimum driving speed vₘₐₓ and/or vₘᵢₙ such that two subsequent acceleration measurements may be conducted within one revolution of the tire. This may guarantee that scenarios are excluded wherein the acceleration sensor is within the contact patch are at a time tₒ, leaves the contact patch area and returns to the contact patch at a time tₒ + T_{seq}.

The tire revolution time Tᵣₑᵥ is defined by = 2πR_{t/}v, wherein Rₜ is the tire radius between the axis of the tire and the tread surface to be in contact with the road and v is the vehicle's velocity.

The contact patch time T_{cp} for which a certain point on the circumference of the tire lies in the contact patch of the tire may be defined by the vehicle's velocity v, the tire radius Rₜ, and the portion p_{cp} (typically, e.g., 1 - 10%, or around 5%) of the tire circumference that is in contact with the ground thus forms the contact patch: T_{cp} = p_{cp}·Tᵣₑᵥ = p_{cp}2πRₜ/v.

The predetermined minimum driving speed vₘᵢₙ may for example relate to speeds above typical parking speeds, e.g., 5 km/h, 10 km/h, or 15 km/h. The predetermined maximum driving speed vₘₐₓ may for example relate to typical maximum speeds at which a certain vehicle can be driven, e.g., around 90 km/h or 100 km/h, e.g., for a truck.

In one example, the method may further comprise repeating the measurement sequence in time intervals, Tᵣₑₚ.

This may yield the advantage that regularly an updated acceleration value may be provided and based thereon, the tire mileage may be determined. The higher the measurement frequency and the shorter Tᵣₑₚ, the smaller the steps become in which the acceleration is measured/sampled. Once the Tᵣₑₚ is on the same order of magnitude on which the vehicle velocities change, the acceleration is samples in a quasi-continuous way and reducing Tᵣₑₚ any further may not yield any substantial increase in the accuracy of the tire milage determination anymore.

In view of the above, the Tᵣₑₚ may be chosen as follows: Tᵣₑₚ may, e.g., be in a range from 1 to 60 seconds, preferably 5 to 30 seconds, more preferably 10 to 20 seconds.

It was shown that a Tᵣₑₚ in the ranges above of around 15 seconds yields an advantageous balance by yielding a sufficiently high sampling rate to provide an accurate tire mileage determination on the one hand and being so low on the other hand that the method may be performed in an economical manner saving energy in breaks between sequences of up to 60 seconds while an acceleration measurement may take, e.g., less than a second.

The method may, e.g., further comprise discarding, at least once per measurement sequence, at least one acceleration measured in the two or more acceleration measurements of the measurement sequence.

This may advantageously result in discarding all acceleration values measured when the acceleration sensor is within the contact patch.

The discarding may be done based at least partly on assessing the measured acceleration values, e.g., by comparing the magnitude of the acceleration values of one sequence:
For example, the discarding may comprise discarding the lowest acceleration measured in the measurement sequence.

Thereby, as one expects the measured acceleration to be lower when the acceleration sensor is within the contact patch, the method may automatically identify and discard the erroneous acceleration value and determine the tire mileage based only on non-erroneous acceleration values. This may increase the reliability and accuracy of the method and the determined tire mileage.

In some examples, the measurement sequence may comprise three or more acceleration measurements; the method further comprising determining an average acceleration value per measurement sequence based on at least two acceleration values that are not discarded.

Herein, vₘₐₓ may, e.g., be in a range from 60 km/h to 140 km/h, preferably in a range from 80 km/h to 100 km/h.

These ranges may be realistic maximum driving speeds for, e.g., heavy vehicles like trucks, for which such tire mileage determination may be particularly relevant. Particularly, it may be advantageous to choose a vₘₐₓ to be equal to or above the speed limit for the respective vehicle: E.g., in Europe a typical speed limit is 80 km/h to 90 km/h for trucks and 120 km/h to 130 km/h for cars. In some states in the US, for example, the speed limit is 85 mph (137 km/h) for both, trucks and cars. This may allow to ensure that under expected conditions, said vₘₐₓ may not or only rarely be exceeded by the driver operating the vehicle.

Herein, vₘᵢₙ may be in a range from 5 km/h to 30 km/h, preferably in a range from 10 km/h to 20 km/h.

These ranges comprise sufficiently low speeds such that not being able to guarantee non-erroneous acceleration measurements outside of the contact patch may play no significant role for the over-all accuracy and reliability of the method.

Herein, the T_{cp} may be in a range from 0.01· Tᵣₑᵥ to 0.15· Tᵣₑᵥ, preferably from 0.025· Tᵣₑᵥ to 0.075· Tᵣₑᵥ.

Assuming these values may be sufficiently accurate to model a real contact patch of a tire and thus improve the accuracy and reliability of the method.

The T_{cp} may, e.g., be adjusted based at least partly on an inflation state of the tire, e.g., measured by a pressure and/or a temperature of the tire, e.g., by a temperature and/or pressure sensor mounted to the tire, e.g., in a similar or the same way as the acceleration sensor.

The method may, e.g., further comprise determining, by a computation means, the tire mileage based on the acceleration measurements, wherein determining the tire mileage may, e.g., be performed at least once per a time interval associated with the measurement sequence.

This may, e.g., yield an efficient and energy-efficient way to determine the tire mileage stepwise achieving a satisfactory efficiency, accuracy, and reliability of the method.

A second aspect of the present invention relates to a method for tire mileage determination of a tire. Said method comprises measuring, by an acceleration sensor mounted to the tire, an acceleration in a tire radial direction in one or more acceleration measurements and calculating, by a computation means, a reference acceleration for a reference velocity. Therein, the reference velocity comprises a velocity of a predetermined list of velocities and the calculating comprises obtaining the reference acceleration by discrete integration of an initial value for each reference velocity. The method further comprises determining a tire velocity based at least partly on the measured acceleration and the reference acceleration.

Therein, measuring, by an acceleration sensor mounted to the tire, the acceleration may be performed as described herein.

Regarding the second aspect, the inventors understood that calculating the reference acceleration for the reference velocity may yield various advantages. In detail, the discretization of the method, related to the fact that the reference velocity comprises a velocity of a predetermined list of velocities, allows to reduce the required amount of calculation operations, the calculation complexity, and/or the required storage so far that said method may, e.g., be performed in an extremely efficient and anergy- and cost-saving way. The method may thus even be performed by a tire-mounted computation means such that the tire, by its computation means may directly output its mileage to, e.g., an external device like a remote server and/or a vehicle-mounted device.

The on sensor mileage computation is based on the measure of the mean radial (centrifugal) acceleration. The mean radial acceleration is converted into vehicle speed by means of a convenient (in the sense better explained below) standard wheel radius Rₒ: vₒ² = aRₒ, where vₒ is the standard vehicle speed with a wheel of radius Rₒ.

If the real wheel radius is Rₜ, then the real wheel speed v (i.e., the vehicle's velocity) can be expressed through v²= vₒ²·Rₜ/Rₒ.

The distance x traveled by the wheel may then be approximated by $x = {\sum }_{i = 1}^{n} \sqrt{{V}_{i}^{2}} Δ {t}_{i} = {\sum }_{i = 1}^{n} \sqrt{\frac{{R}_{t}}{{R}_{0}} ∗ {V}_{0 i}^{2}} Δ {t}_{i} = \sqrt{\frac{{R}_{t}}{{R}_{0}}} {\sum }_{i = 1}^{n} {V}_{0 i} Δ {t}_{i}$ If Δ *tᵢ* = Δ*t* is constant (the measure occurs at regular intervals) than we have: $x = Δ t \sqrt{\frac{{R}_{t}}{{R}_{0}}} {\sum }_{i = 1}^{n} {V}_{0 i}$

This means that, given the above considerations, to evaluate the distance x traveled by the wheel the, the only operation needed for each acceleration measurement is summing the corresponding speed vₒᵢ. The final traveled distance x, obtained by multiplying the speed sum with the constant $\sqrt{\frac{{R}_{t}}{{R}_{0}}}$ can, e.g., be evaluated by a server, e.g., a remote and/or a cloud based server (e.g., after the accumulated speed has been transmitted), and/or by tire-mounted means, e.g., a computation means operably connected with the acceleration sensor as described herein, just before the traveled distance x may be transmitted.

The inventors realized that this framework could be exploited in order to simplify the mileage determination substantially in order to make it more economical, faster, easier, more reliable, and/or executable by smaller and/or cheaper components/computation means, e.g., tire-mounted computation means. Said optimization is based on calculating the reference acceleration for a reference velocity and determining the tire velocity based at least partly on the measured acceleration and the reference acceleration, as described herein.

In detail, a good approximation of the velocity may be achieved by simultaneously complying to the following requirements on the method that allow to achieve the advantages mentioned herein: a well-defined resolution (In test implementations, a resolution of 1 km/h was achieved), working only with integers, minimizing the number of complex operations like multiplications, divisions, or even more complex operations, and optimizing memory consumption by avoiding the usage of a lookup table and keeping the code/computer for executing the method described herein within a very low footprint. Within this framework, calculating the reference acceleration for a reference velocity and determining the tire velocity based at least partly on the measured acceleration and the reference acceleration may be executed as follows:
Calculating the reference acceleration for a reference velocity may be based on the following understanding: The inventors found that reformulating vₒ² = aRₒ into $λ {a}_{s} = \frac{{V}_{0}^{2}}{{R}_{0}} = \frac{{W}_{0}^{2}}{{\left(3.6\right)}^{2} {R}_{0}}$ wherein *aₛ* is a sampled acceleration converted into $\frac{m}{{s}^{2}}$ by means of the constant λ while *W*₀ is the speed expressed in km/h. Multiplying by a constant $k ∈ ℕ$ and dividing by λ the inventors obtained: ${ka}_{s} = \frac{k}{λ {\left(3.6\right)}^{2} {R}_{0}} {W}_{0}^{2}$

By then taking the second derivative with respect to *W*₀, the inventors reached the following expression for the second derivative of the sampled acceleration *aₛ*: $\frac{k {\partial }^{2} {a}_{s}}{\partial {W}_{0}^{2}} = \frac{2 k}{λ {\left(3.6\right)}^{2} {R}_{0}}$

The method may comprise an (initial) calibration step, wherein, e.g., the calibration may comprise selecting the constant ${R}_{0} ∈ ℝ$, as close as possible to the true Rₜ, selecting λ (which, since it may represent a conversion of units, can be a real number, e.g., in the first test by the inventors λ = 9.81/10) and the constant $k ∈ ℕ$ in order to have $D = \frac{2 k}{λ {\left(3.6\right)}^{2} {R}_{0}} ∈ ℕ .$

In result, said calibration may therefore comprise measuring a vehicle speed and linking it with the acceleration measured by an acceleration sensor as described herein, such that the vehicle velocity may be determined based at least partly on the radial acceleration measured by the acceleration sensor with a reduced error, e.g., to the influence of the contact patch described herein. In some examples, it may be sufficient to perform said calibration only once for a tire and/or only once for a set of tires comprising plurality of tires, e.g., tires with identical and/or similar Rₜ.

After constant selection, as described herein and at least with a good approximation, the inventors found that they can evaluate the parameter *ã*_{*s*,}*ₙ = kaₛ*(*W*_{0*,n*}), proportional to the centrifugal acceleration at a certain speed ${W}_{0 , n} = n ∈ ℕ$ with a resolution of about 1 km/h.

In essence, discrete integration of an initial value, e.g., *D*, for each reference velocity, and the reference velocity and the reference acceleration being integers can significantly keep the required calculation cost and required storage low. This may make the whole method so efficient that it may, e.g., be executed by a tire-mounted computation means, e.g., one that is comprised in a sensor unit comprising the acceleration sensor and the computation means and/or one wherein the computation means is included in the acceleration sensor.

Determining the tire velocity based at least partly on the measured acceleration and the reference acceleration.

Determining the tire velocity may comprise comparing the measured acceleration and the reference acceleration.

This may, e.g., yield the advantage that the reference acceleration may be determined in an energy-, (computational) cost-, and/or storage-saving way, e.g., as described herein. For example, the calculating may comprise calculating the reference acceleration by discrete integration, wherein the discrete integration may be an integration over velocity which proved to be particularly suitable to achieve the advantages named herein.

For example, the discrete integration over velocity may provide a particularly efficient and simply way of determining the tire mileage and is in one example outlined herein:
Using a simple recursive formula based on the discrete integration of D (corresponding to the second derivative of the acceleration over velocity), the inventors obtained: ${d}_{n} = {d}_{n - 1} + D ⋅ 1 ,$ wherein dₙ corresponds to the first derivative of the acceleration over velocity at n km/h and dₙ₋₁ corresponds to the first derivative of the acceleration over velocity at n-1 km/h. The factor of "1" relates to the fact that in the above example, the method samples in steps of 1 km/h. Other step widths, smaller (e.g., 0.1 or 0.5 km/h, optionally when switching to other units (e.g., m/h) to keep integer velocity values) or larger (e.g., 2, 5, or 10 km/h) are possible as well. Based thereon, the inventors found an exemplary way to calculate dₙ based only on integers and addition thereof.

In full analogy, the first derivative may then be used to determine the acceleration based thereon: ${{a}^{˜}}_{s , n} = {{a}^{˜}}_{s , n - 1} + {d}_{n} ⋅ 1 ,$ wherein *d*₁ and *ã*_{*s,*1} may be suitably defined starting point constants, e.g., in the calibration step. Again, the factor of "1" relates to the fact that in the above example, the method samples in steps of 1 km/h. Other step widths, smaller (e.g., 0.1 or 0.5 km/h) or larger (e.g., 2, 5, or 10 km/h) are possible as well. At each speed step n, the *ã*_{*s*,*n*} can so be estimated and/or compared to the current measure of *kaₛ.* When the *ã*_{*s*,*n*} ≥ *kaₛ* is satisfied the speed *Wₙ* has been found with the required resolution.

The two equations *dₙ = d*_{*n*-1} *+ D ·* 1 and *ã*_{*s*,*n*} = *ã*_{*s,n*-1} + *dₙ* · 1 may, e.g., be linked to one another in a loop as described herein, e.g., such that a reference acceleration is determined for at least one reference velocity.

The basic idea relates to finding some constants in order to have the required speed resolution, and then evaluate the right speed with simple operations. In detail, only sums may be required in the method to be checked against *kaₛ* (that needs only one integer multiplication).

In a current implementation of the mileage for a truck tire, it was found that a good choice of the constants is *k =* 13 and *R*₀ ≈ 0.5114 m, this gives out a value of *D* = 4, *d*₁ = 2, *ã*_{*s*,1} = 2.

A viable alternative is to evaluate to *kaₛ,* with *k* and *R*₀ chosen as before satisfying $D = \frac{2 k}{λ {\left(3.6\right)}^{2} {R}_{0}} ∈ ℕ$ , then evaluate an optimized integer square root of it. This can be sufficient and for some speeds (the higher ones) even more efficient in terms of computation steps (and so time) than the recursive computation of *dₙ = d*_{*n*-1} *+ D* · 1 and *ã*_{*s*,}*ₙ = ã*_{*s,n*-1} + *dₙ* · 1, but at the cost to include in the computation also other operations (at least left and right bit shifts) and with a substantial increase of the code footprint length. It becomes therefore a matter of find the best solution for the computation requirements of the specific system at hand.

The integration over velocity may be performed in equidistant velocity intervals. In the example above, e.g., the equidistant velocity interval was 1 km/h but could also be, e.g., 0.1 km/h, 0.5 km/h, 2 km/h, 3 km/h, 4 km/h, 5 km/h, or 10 km/h or any other interval. This may yield the advantage of simplifying the method and may yield suitable sampling intervals on the one hand and allow simplifying the steps of the method as outlined herein.

The inventors showed that the velocity interval being in a range from 0.1 km/h to 10 km/h, preferably from 0.5 km/h to 2 km/h is particularly advantageous to achieve high accuracy in the tire mileage determination.

The method may comprise a discrete integration which may comprise a recursive summation and/or the reference velocity and/or the reference acceleration may be integers. This may, e.g., in the example described herein, relate to the two equations *dₙ* = *d*_{*n*-1} *+ D* · 1 and *ã*_{*s*,}*ₙ = ã*_{*s,n*-1} + *dₙ* · 1.

In this example, the recursive summation comprises a first step and a second step; wherein the first step comprises calculating a first derivative of the reference acceleration; and the second step comprises calculating the reference acceleration based at least partly on the first derivative of the reference acceleration.

The recursive summation may comprise integer start values, e.g., as described herein. In the example described herein for a truck tire, it was found that a good choice of the constants is *k =* 13 and *R*₀ ≈ 0.5114 *m*, this gives out a value of *D* = 4, *d*₁ = 2, *ã*_{*s*,1} = 2, being the integer start values.

The method may, in some examples, further comprise repeating at least one of the steps of the method in time intervals of Tᵣₑₚ.

Thereby, at least one of the steps of the method may be performed once per time interval Tᵣₑₚ. In general, this may allow for continuous tire mileage determination of a tire, measuring the acceleration in a tire radial direction, calculating the reference acceleration for a reference velocity, and/or determining the tire velocity based at least partly on the measured acceleration and the reference acceleration. In a preferred embodiment, a sufficient number of steps is repeated in time intervals of Tᵣₑₚ such as to allow for the repeated/quasi-continuous tire mileage determination.

In some examples, the method may further comprise determining, by a computation means, a tire mileage based on the one or more acceleration measurements, wherein determining the tire mileage may performed at least once per a time interval associated with the one or more acceleration measurements, e.g., Tᵣₑₚ.

In general the steps of the methods referred to herein as the first aspect and second aspect of the invention as well as their optional steps and/or features may be combined with one another. For example, aspects of how the acceleration is measured according to the first aspect of the invention may be implemented in the second aspect of the invention.

Accordingly, the following optional features relate to both the first and the second aspect of the invention:
In some examples, determining the tire mileage may comprise determining a tire velocity based at least partly on the measured acceleration; and multiplying the tire velocity by a duration of the time interval associated with the measurement sequence, preferably Tᵣₑₚ.

This way of discretely approximating the tire mileage may pose a simple yet efficient method.

The method may, e.g., further comprise providing the tire mileage to an external server, preferably a cloud-based server.

This may, for example, allow for a central data collection and/or processing which may, e.g., open new possibilities to outsource functionalities to said server. For example, upon being provided with a tire mileage, the server could be configured to determine a wear stayed and/or a wear rate of the tire based thereon, e.g., by further considering further tire parameters like pressure, temperature, forces acting on the tire, and/or tread profile parameters, etc. Any aspect described herein in reference to the remote server may also be implemented by means of a tire mounted computation means, and vice versa.

The method may further comprise identifying the tire by a transponder, preferably an RFID tag; and/or associating the tire with the acceleration sensor.

This identification and/or association is particularly advantageous as it allows to automatically label the data provided by the method described herein which facilitates data management and/or further data processing, storing, etc.

For example, identifying the tire may be based at least partly on tire information (e.g., SGTIN-96). This could, e.g., could be also written in terms of a QR code and/or a bar code on the tire. Independent from the way the tire is identified, it is essential to somehow read this information and pair it with the acceleration sensor.

A third aspect relates to a computer program comprising instructions for executing the steps of the method described herein.

A fourth aspect relates to a system comprising means configured to execute the steps of the method described herein.

The same advantages described herein in reference to the method apply analogously to the computer program and the system.

### 4. Description of the figures

Fig. 1a shows an exemplary tire in a plan view in axial direction with an inset highlighting the contact patch of the tire.
Fig. 1b shows three exemplary snapshots of the inset of Fig. 1a, wherein a tire-mounted acceleration sensor passes through the contact patch of the tire.
Fig. 2 shows an exemplary scheme of a vehicle equipped with six tires each equipped with an acceleration sensor.
Fig. 3 shows an exemplary three-dimensional sketch of a tire with an acceleration sensor mounted to an inner liner of the tire.
Fig. 4 shows an exemplary acceleration measured by an acceleration sensor over time.
Fig. 5 shows a graph of the determined tire mileage of six tires of a truck over time, wherein the tire mileage is determined according to the method described herein.

### 5. Detailed description of preferred embodiments

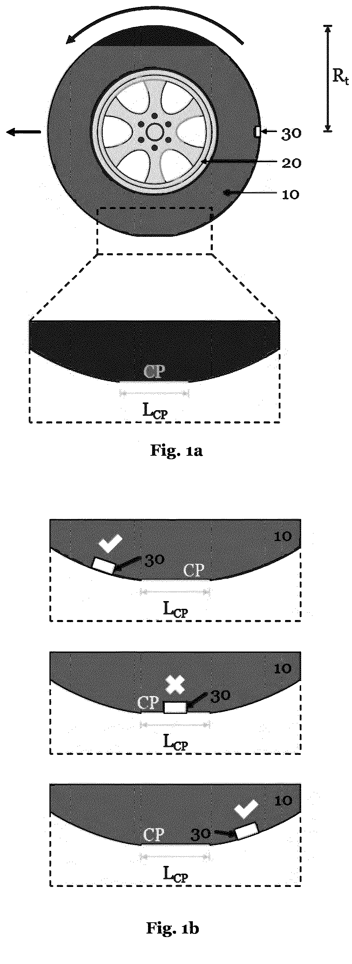

Fig. 1a shows an exemplary tire 10 with a tire radius Rₜ on a wheel 20 and with a tire-mounted acceleration sensor 30 in a plan view in axial direction with an inset highlighting the contact patch CP of the tire 10. The tire 10 of Fig. 1a is shown in counterclockwise rotation which translates to the vehicle driving to the left as indicated by the arrows in Fig. 1a. The inset in Fig. 1a shows a magnified portion of the tire 10 where the tire 10 is in contact with the ground. The portion of the tire 10 that is in contact with the ground is called the contact patch CP and has a length L_{CP} in the tire circumferential direction which corresponds to around 5% of the circumference of the tire 10.

The acceleration sensor 30 in Fig. 1a is shown for illustrative reasons, though and most preferred embodiments, it may be mounted to the inside of the tire 10 and would not be visible from the outside. However, there may be embodiments wherein the acceleration sensor 30 may be mounted to the outside of the tire 10, e.g., one of the sidewalls of the tire 10. If mounted on a sidewall, the effect of the contact patch on the acceleration signal could be less visible, going close to the rim it will become almost negligible. However, at the same time, the amount of the acceleration measured by the sensor may reduce simultaneously. Herein, the acceleration sensor 30 may generally be part of a tire mounted sensor (unit), wherein in the tire mounted sensor (unit) may, e.g., further comprise a computation means and/or a transponder, as described herein.

The size and/or shape of the contact patch CP may the depend, e.g., on the tire load, pressure, temperature, number of tires mounted to the vehicle, weight distribution on the vehicle, and/or, tire material/composition, etc. and/or may be the same or vary for different tires of the same vehicle.

The inventors realized that it is critical to consider the influence of the contact patch CP in methods for tire mileage determination. Said influence is illustrated by means of Fig. 1b:
Fig. 1b shows three exemplary snapshots of the inset of Fig. 1a, wherein a tire-mounted acceleration sensor 30 passes through the contact patch of the tire 10 due to the counterclockwise rotation of the tire 10: In the first snapshot (cf. top), the acceleration sensor 30 is located at the left side of the contact patch CP and may thus perform an undisturbed acceleration measurement. In the second snapshot (cf. middle), the acceleration sensor 30 is rotated further in the counterclockwise direction. It is therefore located within the length L_{CP} of the contact patch CP and may be disturbed in its acceleration measurement as it is located at a radius from the axis that is smaller than Rₜ from Fig. 1a. This effect becomes more prominent for tires supporting vehicles with increased load since the CP length becomes longer in such scenarios. In the third snapshot (cf. bottom), the acceleration sensor 30 is rotated further in the counterclockwise direction. It is therefore located at the right side of the contact patch CP and may thus perform an undisturbed acceleration measurement.

In the example of Fig. 1b, the first and the third acceleration measurement may thus be suitable to be taken into account for a tire mileage determination while the second acceleration measurement, wherein the acceleration sensor 30 is located within the contact patch CP may be discarded.

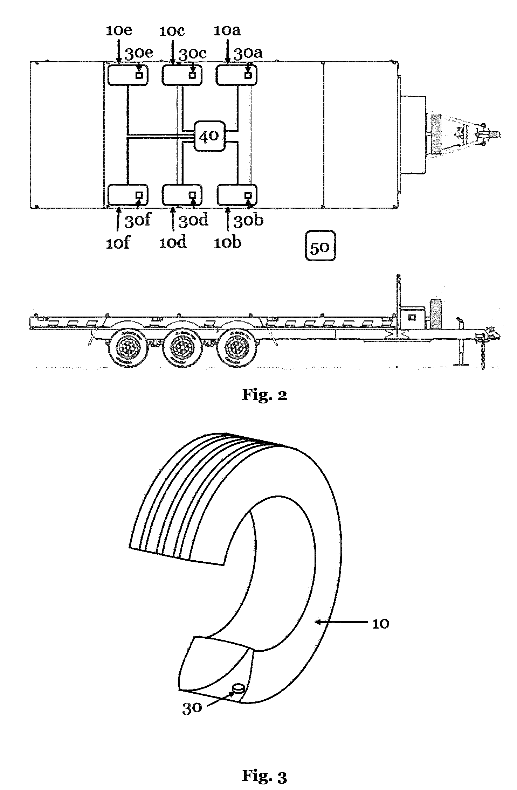

The top panel of Fig. 2 shows an exemplary scheme of a vehicle, i.e., a trailer in the example of Fig. 2, (gray) equipped with six tires 10a, 10b, 10c, 10d, 10e, 10f each equipped with an acceleration sensor 30a, 30b, 30c, 30d, 30e, 30f. The bottom panel of Fig. 2 shows a side view of the exemplary trailer for reference. In detail, the vehicle may in other examples be, e.g., a truck, a car, etc. Thereby, Fig. 2 illustrates that the concept of the invention is applicable to various kinds of vehicles (e.g., with and without a motor). The exemplary trailer of Fig. 2 comprises a front left tire 10a with an acceleration sensor 30a, a front right tire 10b with an acceleration sensor 30b, and four rear tires 10c, 10d, 10e, 10f, the left inner rear tire 10c with an acceleration sensor 30c, the right inner rear tire 10d with an acceleration sensor 30d, the left outer rear tire 10e with an acceleration sensor 30e, and the right outer rear tire 10f with an acceleration sensor 30f. One or more of the acceleration sensors 30a, 30b, 30c, 30d, 30e, 30f may be configured to provide at least some of the data described herein, e.g., the tire mileage and/or the (measured and/or reference) acceleration to a vehicle-based computation unit/server 40 and/or a remote server 50. This concept may generally apply to other vehicles, e.g., comprising another number of tires and/or with tires in different arrangements.

Fig. 3 shows an exemplary three-dimensional sketch of a tire 10 with an acceleration sensor 30 mounted to an inner liner of the tire 10.

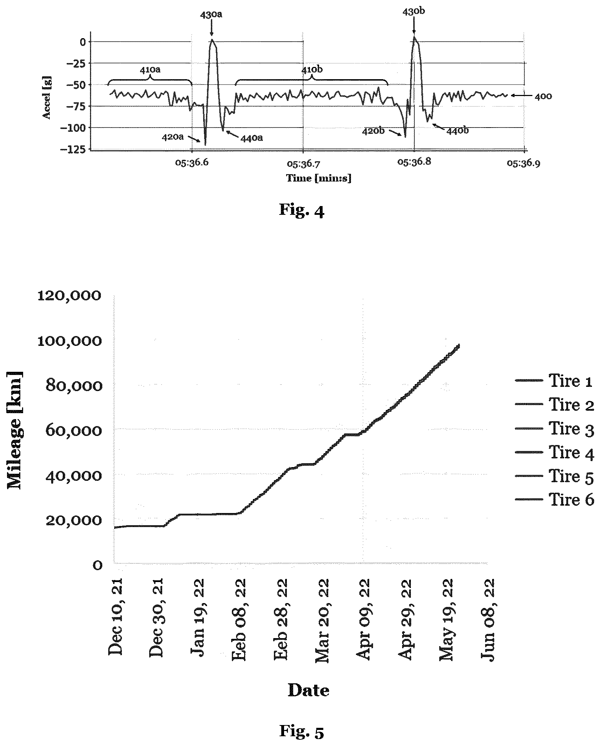

Fig. 4 shows an exemplary acceleration 400 measured by an acceleration sensor over time.

In detail, the measured acceleration fluctuates around a certain level between -50 g and - 75 g for those time periods 410a, 410b during which the sensor lies outside of the contact patch. During these time periods, the acceleration sensor can perform accurate acceleration measurements that may provide representative acceleration values to determine a tire mileage based thereon.

After the time periods 410a, 410b, the acceleration sensor approaches the contact patch. The curvature of the circumference of the tire is the highest at the two circumferential ends of the contact patch. Therefore, the highest radial acceleration acts on the acceleration sensor when it passes these two end portions of the contact patch. As a consequence, it records the highest absolute acceleration values (accelerations of almost -125 g in the example of Fig. 4) at times when it enters the contact patch 420a, 420b and when it leaves the contact patch 440a, 440b.

When the sensor is within the contact patch, it does not experience any radial acceleration as the curvature of the circumference of the tire is essentially zero (assuming a flat surface the vehicle is driving on). On a real truck/car tire the acceleration at the center of the contact patch is therefore often (close to) zero since that portion of the tread and/or inner liner is at rest. Therefore, the measured acceleration drops to zero at times 430a, 430b.

Altogether, Fig. 4 therefore illustrates why it is of such importance to measure the acceleration at times when the acceleration sensor does not lie within the contact patch to allow for an accurate and reliable mileage determination based on acceleration measurements.

Fig. 5 shows a graph of the determined tire mileage of six tires of a truck over time, wherein the tire mileage is determined according to the method described herein. Notably, almost the same mileage is measured for all wheels and the final error is reasonably low (i.e., 5% or less). The relative mileage differences between the six tires amount to around 1%. In detail, they vary by ca. 1,000 km over a total driven distance of ca. 96,000 km.

An exemplary code that allows for tire mileage determination of a tire when provided with the acceleration measurement input may implement the steps of the inventive method as follows:
In an initial calibration step, *d*₁ , *D* and *ã*_{*s*,1} may be set to suitable values as described herein. Further, a step width Δ*x* for the subsequent discrete integration may be set as well. For example, one may choose the following integers: *D* = 4, *d*₁ = 2, *ã*_{*s*,1} = 2, and Δ*x* = 1.

Once these values are set, the equations *dₙ = d*_{*n*-1} *+ D ·* Δ*x* and *ã*_{*s*,*n*} = *ã*_{*s,n*-1} *+ dₙ* · Δ*x* may be used to recursively provide values of *dₙ* and *ã_{s,n}*. In detail, with the exemplary starting values above this may yield: *d*₂ *= d*₁ *+ D* · Δ*x* = 6, *ã*_{*s*,2} = *ã*_{*s,*1} + *d*₂ · Δ*x* = 8, *d*₃ = 10, *ã*_{*s,*3} = 18, etc. In an exemplary code, the equations *dₙ* = *d*_{*n*-1} *+ D* · Δ*x* and *ã*_{*s*,*n*} = *ã*_{*s,n*-1} + *dₙ* · Δ*x* may be, e.g., implemented in a loop (for example, a for-loop) until a break condition is met. Said break condition may, e.g., correspond to comparing the reference acceleration *ã*_{*s*,*n*} with the acceleration measured by the acceleration sensor mounted to the tire multiplied by *k*, e.g., wherein the comparing may be done in every complete loop of the for-loop. In essence, the exemplary code thus comprises calculating a reference acceleration for reference velocities in reference velocity steps of Δ*x* = 1 km/h counting up (from 2 km/h in Δ*x* = 1 km/h increments) until the break condition is met. Thereby, in each loop, a reference acceleration for a certain velocity is calculated, wherein the velocity increases with each loop by Δ*x.*

When the break condition is met, the reference acceleration *ã*_{*s*,*n*} the measured acceleration may be assumed to match within the degree of accuracy of the code, and the reference velocity associated with the reference acceleration may be assumed as the vehicle velocity and the tire mileage may be determined based thereon. As the reference acceleration increases with each loop, the break criterion may be met when the reference acceleration is equal to or larger than the measured acceleration multiplied by *k*. Therefore, two velocity values may be used to determine the tire mileage: the velocity for which the reference acceleration is equal to or larger than the measured acceleration or the velocity from the loop just before the break condition was met, essentially corresponding to the highest reference acceleration that is less than the measured acceleration. In the example of the exemplary code described herein, either of these two velocity values may be taken for the tire mileage calculation by multiplying said velocity value with a time interval associated with the measurement (e.g., the time interval Tᵣₑₚ between two consecutive acceleration measurement sequences as described herein).

## Claims

1. A method for tire mileage determination of a tire, the method comprising:
measuring, by an acceleration sensor (30) mounted to the tire (10), an acceleration in a tire radial direction in one or more acceleration measurements;
calculating, by a computation means, a reference acceleration for a reference velocity;
wherein the reference velocity comprises a velocity of a predetermined list of velocities; and
wherein the calculating comprises obtaining the reference acceleration by discrete integration of an initial value for each reference velocity; and
determining a tire velocity based at least partly on the measured acceleration and the reference acceleration.

2. The method of claim 1, wherein determining the tire velocity comprises comparing the measured acceleration and the reference acceleration.

3. The method of claim 1 or 2, wherein the discrete integration is an integration over velocity.

4. The method of any of claims 1 - 3, wherein the integration over velocity is performed in equidistant velocity intervals.

5. The method of claim 4, wherein the velocity interval is in a range from 0.1 km/h to 10 km/h, preferably from 0.5 km/h to 2 km/h.

6. The method of any of claims 1 - 5, wherein the discrete integration comprises a recursive summation and/or wherein the reference velocity and the reference acceleration are integers.

7. The method of claim 6, wherein the recursive summation comprises a first step and a second step;
wherein the first step comprises calculating a first derivative of the reference acceleration; and
the second step comprises calculating the reference acceleration based at least partly on the first derivative of the reference acceleration.

8. The method of claim 6 or 7, wherein the recursive summation comprises integer start values.

9. The method of any of claims 1 - 8, further comprising repeating at least one of the steps of the method in time intervals of Tᵣₑₚ.

10. The method of any of claims 1 - 9, further comprising determining, by a computation means, a tire mileage based on the one or more acceleration measurements, wherein determining the tire mileage is performed at least once per a time interval associated with the one or more acceleration measurements.

11. The method of claim 10, wherein determining the tire mileage comprises determining the tire velocity based on the acceleration measurements; and multiplying the tire velocity by a duration of the time interval associated with the one or more acceleration measurements, preferably Tᵣₑₚ.

12. The method of any of claims 1 - 10, further comprising providing the tire mileage to an external server, preferably a cloud-based server.

13. The method of any of claims 1 - 12, further comprising identifying the tire by a transponder, preferably an RFID tag; and/or associating the tire with the acceleration sensor.

14. A computer program comprising instructions for executing the steps of the method of any of claims 1 - 13.

15. A system comprising means configured to execute the steps of the method of any of claims 1 - 13.

## Patentansprüche

1. Verfahren für eine Bestimmung einer Reifenlaufleistung eines Reifens, das Verfahren umfassend:
Messen, durch einen Beschleunigungssensor (30), der an dem Reifen (10) montiert ist, einer Beschleunigung in einer Reifenradialrichtung in einer oder mehreren Beschleunigungsmessungen;
Berechnen, durch ein Rechenmittel, einer Referenzbeschleunigung für eine Referenzgeschwindigkeit;
wobei die Referenzgeschwindigkeit eine Geschwindigkeit einer vorbestimmten Liste von Geschwindigkeiten umfasst; und
wobei das Berechnen ein Erhalten der Referenzbeschleunigung durch diskrete Integration eines Anfangswerts für jede Referenzgeschwindigkeit umfasst; und
Bestimmen einer Reifengeschwindigkeit mindestens teilweise basierend auf der gemessenen Beschleunigung und der Referenzbeschleunigung.

2. Verfahren nach Anspruch 1, wobei das Bestimmen der Reifengeschwindigkeit ein Vergleichen der gemessenen Beschleunigung und der Referenzbeschleunigung umfasst.

3. Verfahren nach Anspruch 1 oder 2, wobei die diskrete Integration eine Integration über die Geschwindigkeit ist.

4. Verfahren nach einem der Ansprüche 1 bis 3, wobei die Integration über die Geschwindigkeit in äquidistanten Geschwindigkeitsintervallen durchgeführt wird.

5. Verfahren nach Anspruch 4, wobei das Geschwindigkeitsintervall in einem Bereich von 0,1 km/h bis 10 km/h, vorzugsweise von 0,5 km/h bis 2 km/h, liegt.

6. Verfahren nach einem der Ansprüche 1 bis 5, wobei die diskrete Integration eine rekursive Summation umfasst und/oder wobei die Referenzgeschwindigkeit und die Referenzbeschleunigung ganze Zahlen sind.

7. Verfahren nach Anspruch 6, wobei die rekursive Summation einen ersten Schritt und einen zweiten Schritt umfasst;
wobei der erste Schritt das Berechnen einer ersten Ableitung der Referenzbeschleunigung umfasst; und
der zweite Schritt das Berechnen der Referenzbeschleunigung mindestens teilweise basierend auf der ersten Ableitung der Referenzbeschleunigung umfasst.

8. Verfahren nach Anspruch 6 oder 7, wobei die rekursive Summation ganzzahlige Startwerte umfasst.

9. Verfahren nach einem der Ansprüche 1 bis 8, ferner umfassend ein Wiederholen mindestens eines der Schritte des Verfahrens in Zeitintervallen von Tᵣₑₚ.

10. Verfahren nach einem der Ansprüche 1 bis 9, ferner umfassend das Bestimmen, durch ein Rechenmittel, einer Reifenlaufleistung basierend auf der einen oder den mehreren Beschleunigungsmessungen, wobei das Bestimmen der Reifenlaufleistung mindestens einmal pro einem Zeitintervall durchgeführt wird, das mit der einen oder den mehreren Beschleunigungsmessungen verknüpft ist.

11. Verfahren nach Anspruch 10, wobei das Bestimmen der Reifenlaufleistung das Bestimmen der Reifengeschwindigkeit basierend auf den Beschleunigungsmessungen; und ein Multiplizieren der Reifengeschwindigkeit mit einer Dauer des Zeitintervalls umfasst, das mit der einen oder den mehreren Beschleunigungsmessungen verknüpft ist, vorzugsweise Tᵣₑₚ.

12. Verfahren nach einem der Ansprüche 1 bis 10, ferner umfassend das Bereitstellen der Reifenlaufleistung an einen externen Server, vorzugsweise einen Cloud-basierten Server.

13. Verfahren nach einem der Ansprüche 1 bis 12, ferner umfassend ein Identifizieren des Reifens durch einen Transponder, vorzugsweise einen RFID-Tag; und/oder das Verknüpfen des Reifens mit dem Beschleunigungssensor.

14. Computerprogramm, umfassend Anweisungen zum Ausführen der Schritte des Verfahrens nach einem der Ansprüche 1 bis 13.

15. System, umfassend ein Mittel, das konfiguriert ist, um die Schritte des Verfahrens nach einem der Ansprüche 1 bis 13 auszuführen.

## Revendications

1. Procédé destiné à déterminer un kilométrage de pneu d'un pneu, le procédé comprenant :
la mesure, par un capteur d'accélération (30) monté sur le pneu (10), d'une accélération dans une direction radiale de pneu dans une ou plusieurs mesures d'accélération ;
le calcul, par un moyen de calcul, d'une accélération de référence pour une vitesse de référence ;
dans lequel la vitesse de référence comprend une vitesse d'une liste prédéterminée de vitesses ; et
dans lequel le calcul comprend l'obtention de l'accélération de référence par intégration discrète d'une valeur initiale pour chaque vitesse de référence ; et
la détermination d'une vitesse de pneu sur la base, au moins en partie, de l'accélération mesurée et de l'accélération de référence.

2. Procédé selon la revendication 1, dans lequel la détermination de la vitesse de pneu comprend la comparaison de l'accélération mesurée et de l'accélération de référence.

3. Procédé selon la revendication 1 ou 2, dans lequel l'intégration discrète est une intégration sur la vitesse.

4. Procédé selon l'une quelconque des revendications 1 à 3, dans lequel l'intégration sur la vitesse est effectuée à des intervalles de vitesse équidistants.

5. Procédé selon la revendication 4, dans lequel l'intervalle de vitesse est compris dans une plage allant de 0,1 km/h à 10 km/h, de préférence de 0,5 km/h à 2 km/h.

6. Procédé selon l'une quelconque des revendications 1 à 5, dans lequel l'intégration discrète comprend une sommation récursive et/ou dans lequel la vitesse de référence et l'accélération de référence sont des nombres entiers.

7. Procédé selon la revendication 6, dans lequel la sommation récursive comprend une première étape et une seconde étape ;
dans lequel la première étape comprend le calcul d'une première dérivée de l'accélération de référence ; et
la seconde étape comprend le calcul de l'accélération de référence sur la base, au moins en partie, de la première dérivée de l'accélération de référence.

8. Procédé selon la revendication 6 ou 7, dans lequel la sommation récursive comprend des valeurs de début entières.

9. Procédé selon l'une quelconque des revendications 1 à 8, comprenant en outre la répétition d'au moins l'une des étapes du procédé à des intervalles de temps de T_{rép}.

10. Procédé selon l'une quelconque des revendications 1 à 9, comprenant en outre la détermination, par un moyen de calcul, d'un kilométrage de pneu sur la base de la ou des mesures d'accélération, dans lequel la détermination du kilométrage de pneu est effectuée au moins une fois par intervalle de temps associé à la ou aux mesures d'accélération.

11. Procédé selon la revendication 10, dans lequel la détermination du kilométrage de pneu comprend la détermination de la vitesse de pneu sur la base des mesures d'accélération ; et la multiplication de la vitesse de pneu par une durée de l'intervalle de temps associé à la ou aux mesures d'accélération, de préférence de T_{rép}.

12. Procédé selon l'une quelconque des revendications 1 à 10, comprenant en outre la fourniture du kilométrage de pneu à un serveur externe, de préférence un serveur infonuagique.

13. Procédé selon l'une quelconque des revendications 1 à 12, comprenant en outre l'identification du pneu par un transpondeur, de préférence une étiquette RFID ; et/ou l'association du pneu au capteur d'accélération.

14. Programme d'ordinateur comprenant des instructions destinées à exécuter les étapes du procédé selon l'une quelconque des revendications 1 à 13.

15. Système comprenant un moyen configuré pour exécuter les étapes du procédé selon l'une quelconque des revendications 1 à 13.
